# EUROPÄISCHE PATENTSCHRIFT

(11) **EP 2 583 596 B1**
(45) Veröffentlichungstag und Bekanntmachung des Hinweises auf die Patenterteilung: **31.12.2014**
(21) Anmeldenummer: 12185268.5
(22) Anmeldetag: 20.09.2012
(51) Int. Cl.: A47J 31/44

(54) **Vorrichtung zur Ausgabe von Milch und Verfahren zum Erwärmen von Milch**
Device for dispensing milk and method for heating milk
Dispositif de production de lait et procédé de chauffage du lait

(30) Priorität: 20.10.2011 DE 102011084901
(43) Veröffentlichungstag der Anmeldung: 24.04.2013
(73) Patentinhaber: FRANKE Kaffeemaschinen AG, 4663 Aarburg (CH)
(72) Erfinder:
(74) Vertreter: Lemcke, Brommer & Partner Patentanwälte Partnerschaft mbB

(56) Entgegenhaltungen:
- EP-A1- 0 635 230
- EP-A1- 1 747 743
- EP-A1- 2 294 952
- WO-A1-2011/105943
- DE-U1-202009 007 945
- US-A- 6 019 032

## Beschreibung

Die Erfindung betrifft eine Vorrichtung zur Ausgabe von Milch gemäß Oberbegriff des Anspruchs 1 sowie ein Verfahren zum Erwärmen von Milch gemäß Oberbegriff des Anspruchs 12.

Es sind Vorrichtungen zur Ausgabe von Milch bekannt, welche eine Pumpe zum Fördern der Milch aus einem Behälter, einen Durchlauferhitzer und einen Auslass zur Ausgabe der Milch umfassen. Über den Auslass kann die Milch in ein Behältnis, wie beispielsweise eine Tasse ausgegeben werden. Das Fördern der Milch mittels einer Pumpe und Erwärmen in einem Durchlauferhitzer zur Ausgabe aus dem Auslass stellt ein einfaches und konstruktiv unaufwändiges Verfahren zur Ausgabe von erwärmter Milch dar.

Solche Vorrichtungen finden insbesondere bei Vorrichtungen zur Erzeugung von flüssigen Lebensmitteln, insbesondere bei Kaffeemaschinen, Verwendung, da häufig Mischgetränke gewünscht sind, welche beispielsweise erwärmte Milch und/oder Milchschaum als einen Bestandteil aufweisen.

Insbesondere bei Kaffeevollautomaten sind häufig Vorrichtungen, wie zuvor beschrieben, integriert oder als Beistellgerät mit der Kaffeemaschine verbunden oder zumindest in einem gemeinsamen Auslass zur Ausgabe von einerseits Milch und andererseits Kaffee verbunden.

Insbesondere bei Verwendung einer Vorrichtung zur Ausgabe von erwärmter Milch im gastronomischen Bereich bestehen hohe Anforderungen an die Hygiene und Reinigungsmöglichkeit. Insbesondere dürfen keine Milchrückstände über längere Zeit in der Vorrichtung verbleiben.

EP 1 747 743 A1 zeigt eine Vorrichtung zur Erwärmung von Milch, bei der ein Milchkonzentrat mit Heißwasser aus einem Durchlauferhitzer gemischt und dadurch erwärmt wird. Außerdem ist ein Dampferzeuger vorgesehen, der zur Erzeugung von Milchschaum dient. Durch einen Dampfstoß Ist zudem ein Nacherhitzten des erwärmten Milchkonzentrat/Heißwassergemisches möglich ist. Die Verwendung von Milch anstelle von Milchkonzentrat ist hier jedoch nicht möglich.

Der Erfindung liegt daher die Aufgabe zugrunde, die vorbekannte Vorrichtung zur Ausgabe von Milch und das vorbekannte Verfahren zum Erwärmen von Milch zu verbessern, um weitere Anwendungsmöglichkeiten und/oder ein einfacheres Einhalten vorgegebener hygienischer Bedingungen zu ermöglichen.

Gelöst ist diese Aufgabe durch eine Vorrichtung zur Ausgabe von Milch gemäß Anspruch 1, durch ein Verfahren zum Erwärmen von Milch gemäß Anspruch 12 und durch ein Verfahren zum wahlweisen Erzeugen von erwärmter Milch oder warmem Milchschaum gemäß Anspruch 16.

Vorzugsweise Ausführungsformen der erfindungsgemäßen Vorrichtung finden sich in den Ansprüchen 2 bis 11. Vorzugsweise Ausführungsformen des erfindungsgemäßen Verfahrens zum Erwärmen von Milch finden sich in den Ansprüchen 13 bis 15. Hiermit wird der Wortlaut sämtlicher Ansprüche explizit per Referenz in die Beschreibung eingebunden.

Die erfindungsgemäße Vorrichtung zur Ausgabe von Milch umfasst eine Pumpe zum Fördern von Milch aus einem Behälter, einen Durchlauferhitzer und einen Auslass zur Ausgabe von Milch, welche derart miteinander zusammenwirkend ausgebildet sind, dass mittels der Pumpe geförderte und mittels des Durchlauferhitzers erwärmte Milch aus dem Auslass ausgebbar ist.

Dieser Grundaufbau entspricht somit dem vorbekannter Vorrichtungen, wobei es im Rahmen der Erfindung liegt, den Durchlauferhitzer saug- oder druckseitig der Pumpe anzuordnen; Vorzugsweise ist der Durchlauferhitzer druckseitig der Pumpe angeordnet.

Wesentlich ist, dass die erfindungsgemäße Vorrichtung weiterhin mindestens einen Dampferzeuger umfasst, welcher Dampferzeuger derart mit dem Durchlauferhitzer zusammenwirkend ausgebildet ist, dass stromabwärts des Durchlauferhitzers und stromaufwärts des Auslasses, der Milch Dampf zur zusätzlichen Erwärmung zuführbar ist.

Die Erfindung ist in der Erkenntnis des Anmelders begründet, dass zwar Durchlauferhitzer eine konstruktiv einfachere Möglichkeit zum Erwärmen von Milch und insbesondere bei Vorsehen einer elektrischen Heizung eine genaue Regelung der Temperatur durch Regelung der elektrischen Leistung ermöglichen, dass jedoch hinsichtlich zweier wesentlicher Aspekte Durchlauferhitzer bei der Erwärmung von Milch nachteilig sind:
Bei typischen Durchlauferhitzern, welche zur Erwärmung von Milch Verwendung finden, findet häufig ein Anbacken von Milch oder Milchresten im Durchlauferhltzer statt. Dies führt zu der Notwendigkeit, dass aufwändige und häufig Reinigungsmittel umfassende Reinigungsschritte durchgeführt werden müssen.

Darüber hinaus kann mit den vorbekannten Durchlauferhitzern Milch nicht mit hoher Durchflussrate auf hohe Temperaturen wie beispielsweise über 80 °C erwärmt werden.

Bei vorbekannten Vorrichtungen wurde häufig die elektrische Leistung erhöht, um eine höhere Durchflussrate und/oder eine gewünschte hohe Milchtemperatur zu erzielen. Untersuchungen des Anmelders ergaben jedoch, dass insbesondere bei Temperaturen größer 70 °C ein verstärktes Anbacken der Milch in einem Durchlauferhitzer erfolgt.

Die erfindungsgemäße Vorrichtung wendet hingegen ein zweistufiges Erwärmungsverfahren an:
In einer ersten Erwärmungsstufe wird die Milch im Durchlauferhitzer erwärmt und anschließend wird Dampf zur zusätzlichen Erwärmung in einer zweiten Erwärmungsstufe zugeführt.

Hierdurch können die wesentlichen, zuvor genannten Nachteile bei Verwendung eines Durchlauferhitzers zum Erwärmen von Milch vermieden werden:
Da die Milch im Durchlauferhitzer nicht bis zur gewünschten Endtemperatur erhitzt werden muss, kann einerseits ein Anbacken der Milch im Durchlauferhitzer vermieden oder zumindest erheblich reduziert werden und darüber hinaus kann eine erheblich höhere Durchflussrate verglichen mit vorbekannten Vorrichtungen erzielt werden.

Untersuchungen des Anmelders ergaben, dass bereits bei einer Temperatur über 70 °C und insbesondere bei einer Temperatur über 80 °C die vorgenannten nachteiligen Effekte im Durchlauferhitzer auftreten.

Vorzugsweise umfasst die Vorrichtung daher eine Steuereinheit, welche die Pumpe und/oder den Durchlauferhitzer derart steuert, dass die Milch am Ausgang des Durchlauferhitzers eine Temperatur im Bereich von 50 °C bis 85 °C, bevorzugt im Bereich 55 °C bis 80 °C, weiter bevorzugt im Bereich 60 °C bis 70 °C aufweist. Hierdurch wird somit ein Anbacken im Durchlauferhitzer vermieden und es ist dennoch möglich, heiße Milch in einer hohen Durchflussrate beispielsweise mit einer Temperatur über 80 °C auszugeben, aufgrund der zusätzlichen zweiten Erwärmungsstufe durch Zugabe von Dampf.

Bei dem erfindungsgemäßen Verfahren zum Erwärmen von Milch wird die Milch mittels einer Pumpe aus einem Behältnis gefördert, mittels eines Durchlauferhitzers erwärmt und über einen Auslass ausgegeben. Auch hierbei liegt es im Rahmen der Erfindung, dass die Milch vor Durchlaufen der Pumpe mittels des Durchlauferhitzers erwärmt wird oder nach Durchlaufen der Pumpe, wobei letzteres eine vorzugsweise Ausführungsform darstellt.

Wesentlich ist, dass bei dem erfindungsgemäßen Verfahren die Milch nach Erhitzen mittels des Durchlauferhitzers zusätzlich durch Zuführung von Dampf erhitzt wird.

Das erfindungsgemäße Verfahren ist vorzugsweise zur Durchführung mittels einer erfindungsgemäßen Vorrichtung bzw. einer vorzugsweisen Ausführungsform hiervon ausgebildet. Ebenso ist die erfindungsgemäße Vorrichtung vorzugsweise zum Durchführen eines erfindungsgemäßen Verfahrens bzw. einer vorzugsweisen Ausführungsform hiervon geeignet ausgebildet.

Zur Erzielung der vorgenannten Vorteile weist bei dem erfindungsgemäßen Verfahren die mittels des Durchlauferhitzers erhitzte Milch vorzugsweise eine Temperatur kleiner 85 °C, vorzugsweise im Bereich 50 °C bis 85 °C, weiter bevorzugt im Bereich 55 °C bis 75 °C, insbesondere bevorzugt im Bereich 60 °C bis 70 °C auf.

Durch die Zuführung von Dampf in der zweiten Erwärmungsstufe erfolgt in einer vorzugsweisen Ausführungsform des erfindungsgemäßen Verfahrens ein Erwärmen der Milch auf eine Temperatur größer 80 °C, vorzugsweise im Bereich 80 °C bis 95 °C, weiter bevorzugt im Bereich 85 °C bis 90 °C.

Durch die zweistufige Erwärmung ist - wie bereits erwähnt - die Ausgabe erwärmter und insbesondere heißer Milch mit einer hohen Flussrate möglich, ohne dass ein Anpacken im Durchlauferhitzer erfolgt. Vorzugsweise erfolgt bei dem erfindungsgemäßen Verfahren die Ausgabe von Milch mit einer Förderleistung von mindestens 0,7 I/min, vorzugsweise mindestens 0,8 l/min, weiter bevorzugt mindestens 0,85 I/min.

Bei der erfindungsgemäßen Vorrichtung ist vorzugsweise stromabwärts einer Dampfzuführstelle, an welcher der Milch/Dampf zugeführt wird und stromaufwärts des Auslasses eine Beruhigungsleitung vorgesehen, welche bei Benutzung von der mit der Dampf erhitzten Milch durchflossen wird. Die Beruhigungsleitung weist vorzugsweise eine Länge von mindestens 5 cm, vorzugsweise im Bereich 10 cm bis 30 cm, weiter bevorzugt im Bereich 15 cm bis 20 cm auf.

Mittels der Beruhigungsleitung wird eine optimale Wärmeübertragung zwischen Milch (bzw. Milchschaum) und Dampf gewährleistet.

Zur Reinigung der wesentlichen von Milch durchflossenen Komponenten der erfindungsgemäßen Vorrichtung ist vorzugsweise in einer Ansaugleitung zwischen Behältnis und Pumpe ein Dampfeinlass vorgesehen, welcher fluidleitend mit dem Dampferzeuger zum wahlweisen Einleiten von Dampf in die Ansaugleitung verbunden ist. Auf diese Weise kann in konstruktiv einfacherer Ausgestaltung eine effiziente Reinigung durch Verwenden von Dampf des vorhandenen Dampferzeugers erzielt werden. Insbesondere ist es vorteilhaft, wenn zusätzlich vorgenannter Dampfeinlass wahlweise mit einer Wasserzuführleitung zum Spülen mittels Wasser verbindbar ist.

Um zu verhindern, dass während der Reinigung mittels Dampf und/oder Wasser eine Ausgabe in den Milchbehälter erfolgt, ist vorzugsweise in der Ansaugleitung stromaufwärts (hinsichtlich der Flussrichtung der Milch bei Förderung) des Dampfeinlasses ein Ventil zum wahlweisen Verschließen der Ansaugleitung vorgesehen.

Die erfindungsgemäße Vorrichtung ist insbesondere zum Erzeugen warmer bzw. heißer Milch geeignet. In einer vorteilhaften Ausführungsform ist die Vorrichtung zusätzlich zur Erzeugung von Milchschaum ausgebildet. Vorrichtungen zum Erzeugen von Milchschaum sind an sich bekannt. In einer vorteilhaften Ausgestaltung ist bei der erfindungsgemäßen Vorrichtung ein Luftventil zum wahlweisen Einführen von Luft vorzugsweise stromaufwärts des Durchlauferhitzers und insbesondere vorzugsweise saugseitig der Pumpe vorgesehen.

In dieser vorzugsweisen Ausführungsform ist es somit möglich, wahlweise Milch oder Milchschaum auszugeben. Hierbei liegt es insbesondere im Rahmen der Erfindung, die Milch wahlweise kalt oder warm und/oder den Milchschaum wahlweise kalt oder warm auszugeben.

Eine besonders vorteilhafte Ausgestaltung ergibt sich hierbei durch Verwendung eines intermittierenden Luftventils. Die Verwendung eines solchen intermittierend betreibbaren Luftventils ist an sich bekannt und beispielsweise in DE 10 2009 041 809 A1 beschrieben. Hierdurch kann in einfacherer Weise durch entsprechende Taktung des Luftventils die Luftzufuhr reguliert werden und die Konsistenz des erzeugten Schaums insbesondere die Größe der Luftporen wahlweise vorgegeben werden.

Das erfindungsgemäße Verfahren ist vorzugsweise als Verfahren zum wahlweisen Erzeugen von erwärmter Milch oder warmem Milchschaum ausgebildet, wobei wahlweise zum Erzeugen von warmer Milch das zweistufiger Erwärmungsverfahren, wie zuvor beschrieben, angewendet wird oder zum Erzeugen von warmem Milchschaum Milch aus einem Behältnis gefördert, mit Luft vermischt und die Milch oder das Milch/Luftgemisch ausschließlich mittels eines Durchlauferhitzers erwärmt wird.

Hierbei ergibt sich der Vorteil, dass zur Erzeugung von warmem Milchschaum kein Dampf verwendet wird und der Dampferzeuger in diesem Fall somit nicht in Betrieb gesetzt werden muss.

In einer vorzugsweisen Ausführungsform der erfindungsgemäßen Vorrichtung weist die Pumpe ein steuerbares Drosselventil auf, welches druckseitig der Pumpe angeordnet ist, wobei der Durchflussquerschnitt des Drosselventils mittels Steuersignalen vorgebbar ist.

Hierdurch wird eine hohe Variabilität im Einsatz der Pumpe ermöglicht:
Einerseits kann die Pumpleistung hochgenau durch das Drosselventil vorgegeben werden. Insbesondere ist dies bei typischen Pumpen mittels eines steuerbaren Drosselventils in größerer Genauigkeit vorgebbar, verglichen mit ausschließlich einer Vorgabe einer Pumpendrehzahl.

Darüber hinaus kann zur Erzeugung von Milchschaum mittels der Drossel nach Zuführen von Luft eine gewünschte Expansion zur Schaumbildung stromabwärts der Drossel wahlweise erzielt werden.

In der vorgenannten vorzugsweisen Ausführungsform zur wahlweisen Ausgabe von Milch oder Milchschaum ist es insbesondere auch möglich, kalten Milchschaum auszugeben. Hierfür wird der Durchlauferhitzer nicht benötigt. In einer vorzugsweisen Ausführungsform weist die erfindungsgemäße Vorrichtung daher eine Umgehungsleitung auf, zum wahlweisen Umgehen des Durchlauferhitzers.

Wie eingangs beschrieben, kann die erfindungsgemäße Vorrichtung bzw. eine vorzugsweise Ausführungsform beispielsweise als Beistellgerät für eine Kaffeemaschine ausgebildet sein. Hierbei ist es vorteilhaft, dass die erfindungsgemäße Vorrichtung einen Steueranschluss zum Verbinden mit einer Steuereinheit der Kaffeemaschine aufweist, welcher Steueranschluss vorzugsweise mit der Pumpe und/oder einem Temperaturfühler des Durchlauferhitzers und/oder weiteren Steuerungskomponenten, wie beispielsweise einer Leistungsregelung des Durchlauferhitzers und/oder in vorzugsweiser Ausführungsform dem zuvor genannten steuerbaren Drosselventil der Pumpe verbunden ist.

Insbesondere vorteilhaft ist es jedoch, die erfindungsgemäße Vorrichtung als Kaffeemaschine auszubilden, welche Kaffeemaschine mindestens eine Brüheinheit zum Erzeugen von Kaffee sowie eine Vorrichtung zum Erwärmen von Milch, wie zuvor beschrieben, umfasst.

Die Brüheinheit ist hierbei mit einem Auslass zur Ausgabe von Kaffee verbunden, welcher bevorzugt identisch oder zumindest benachbart zu dem vorgenannten Auslass zur Ausgabe von erwärmter Milch ist. Hierdurch ist in einfacher und insbesondere automatisierter Weise die Erzeugung von Kaffee-Mischgetränken möglich. Insbesondere in Kombination der vorgenannten vorzugsweisen Ausführungsform, bei welcher wahlweise Milch oder Milchschaum ausgeben werden kann, können die typischen Kaffee/Milchgetränke wie Cappuccino, Latte Macchiatto oder ähnliche Getränke automatisiert erzeugt werden.

Die Pumpe kann als an sich bekannte Milchförderpumpe ausgebildet sein. Hierbei liegen typische Pumpenausgestaltungen im Rahmen der Erfindung, beispielsweise eine Kolbenpumpe oder eine Schlauchquetschpumpe. Insbesondere ist jedoch die Verwendung einer Zahradpumpe vorteilhaft.

Es liegt im Rahmen der Erfindung, dass die erfindungsgemäße Vorrichtung einen Kühlraum, in welchem ein Milchbehältnis anordbar ist, umfasst. Insbesondere kann in dem Kühlraum zumindest die Pumpe angeordnet sein, so dass Pumpe und eine Ansaugleitung der Pumpe zum Einführen in das Milchbehältnis sich stets in einer gekühlten Umgebung befinden.

Weitere vorzugsweise Merkmale und Ausführungsformen der Erfindung und des erfindungsgemäßen Verfahrens werden im Folgenden anhand von Ausführungsbeispielen und den Figuren erläutert. Dabei zeigt:
- Figur 1: ein erstes Ausführungsbeispiel der erfindungsgemäßen Vorrichtung, welche als Kaffeemaschine ausgebildet ist und
- Figur 2: ein zweites Ausführungsbeispiel der erfindungsgemäßen Vorrichtung, welche als Kaffeemaschine ausgebildet ist und einen Durchlauferhitzer mit zwei parallelen Milchleitungen aufweist.

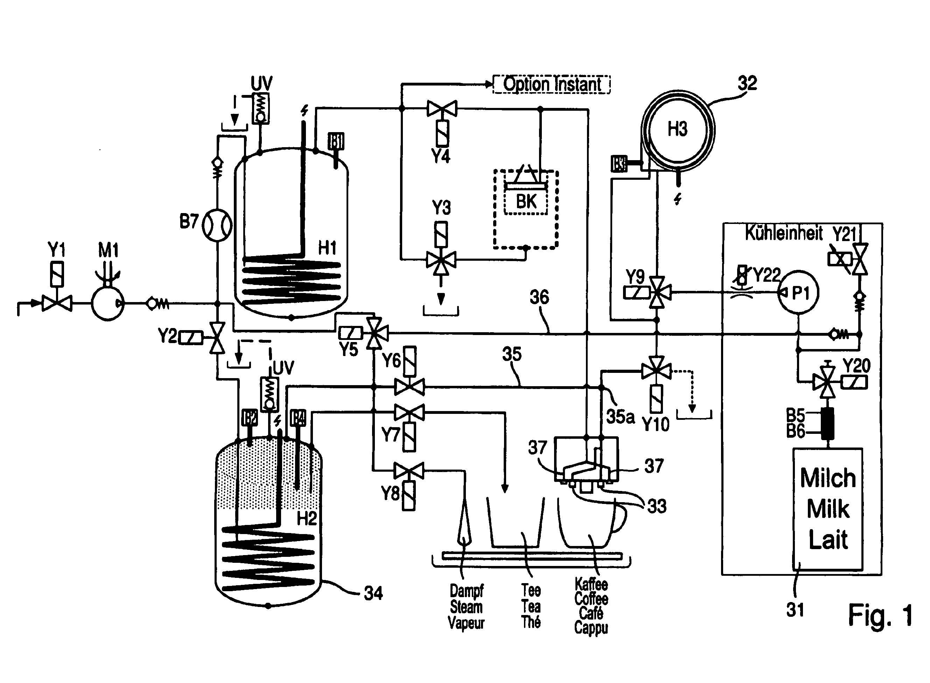

Die in Figur 1 dargestellte Kaffeemaschine umfasst eine Vorrichtung zur Ausgabe von Milch.

Diese umfasst eine Pumpe P1, welche saugseitig über eine Ansaugleitung mit einem Behälter 31 für Milch verbunden ist. Druckseitig ist die Pumpe P1 über ein Zweiwegeventil Y9 mit einem Durchlauferhitzer 32 verbunden. Der Ausgang des Durchlauferhitzers 32 ist über ein als Zweiwegeventil ausgebildetes Drainageventil Y10 mit einem Auslass 33 verbunden. Der Auslass weist zwei voneinander beabstandete Öffnungen auf, so dass wahlweise die Ausgabe in eine Tasse oder in zwei nebeneinander stehende Tassen möglich ist.

Es kann somit Milch mittels der Pumpe P1 aus dem Behälter 31 gefördert werden, mittels des Durchlauferhitzers 32 erhitzt werden und aus dem Auslass 33, beispielsweise in eine Tasse, ausgegeben werden.

Wesentlich ist, dass die Vorrichtung weiterhin einen Dampferzeuger 34 zur Erzeugung von Wasserdampf aufweist.

Dieser ist über eine Dampfleitung 35 mit einer Milchleitung zwischen Drainageventil Y10 und Auslass 33 verbunden, wobei die Dampfleitung an einem Dampfeinleitungspunkt 35a in die Milchleitung mündet.

Hierdurch ist es somit möglich, dass mittels der Pumpe P1 aus dem Behälter 31 geförderte Milch in einer ersten Erwärmungsstufe mittels des Durchlauferhitzers 32 erwärmt wird und nachfolgend mittels Zuleitung von Dampf aus dem Dampferzeuger 34 an dem Dampfeinleitungspunkt 35a zusätzlich in einer zweiten Erwärmungsstufe durch den Dampf erwärmt wird.

Sämtliche Komponenten der Kaffeemaschine gemäß Figur 1 sind mit einer - nicht dargestellten - Steuereinheit verbunden. Sofern die Ausgabe heißer Milch erwünscht ist, steuert die Steuereinheit die Komponenten derart, dass die mittels der Pumpe P1 geförderte Milch am Ausgang des Durchlauferhitzers 32 etwa eine Temperatur von 70 °C aufweist und durch Zuleitung von Dampf am Dampfeinleitungspunkt 35a auf eine Temperatur von etwa 90 °C erwärmt wird. Hierbei beträgt die Förderleistung etwa 0,8 l/min.

Um die Förderleistung der Pumpe P1 exakt regulieren zu können, ist weiterhin eine Drossel Y22 druckseitig der Pumpe zwischen Pumpe P1 und Milchventil Y9 vorgesehen. Es liegt im Rahmen der Erfindung, die Umdrehungszahl der Pumpe P1 zu steuern, um eine vorgegebene Förderleistung zu erzielen.

Ebenso ist es möglich, dass die Pumpe P1 mit voller Leistung betrieben wird und eine exakte Steuerung der Fördermenge durch eine Querschnittsdrosselung druckseitig der Pumpe auf einen vorgegebenen Wert mittels der Drossel Y22 erfolgt.

Sofern zu Beginn der Milchförderung noch Spülwasser in den Milchleitungen befindlich ist, wird dieses zunächst mittels des Drainageventils Y10 in einen Ausguss geleitet und anschließend wird das Drainageventil Y10 umgeschaltet, so dass die erhitzte Milch nun über den Auslass 33 ausgegeben wird.

Zwischen Dampfeinleitungspunkt 35a und Auslass 33 weist die Fluidleitung eine Länge von 20 cm auf. Dies dient dazu, das Dampf-Milchgemisch zu beruhigen.

Die Temperatur des Durchlauferhitzers 32 wird über einen Temperaturfühler B3 überwacht und kann somit mittels der Steuereinheit geregelt werden.

Zur Ausgabe von kalter Milch wird die Pumpe P1 mit maximaler Leistung betriebe und die Drossel Y22 auf maximalem Querschnitt geöffnet. Das Milchventil Y9 wird derart gesteuert, dass die Milch direkt, unter Umgehung des Durchlauferhitzers 32, dem Auslass 33 zugeführt wird.

Die erfindungsgemäße Vorrichtung ist darüber hinaus geeignet, kalten oder warmen Milchschaum auszugeben:
Hierzu weist die Vorrichtung ein intermittierendes Luftventil Y21 auf, welches einerseits mit der Umgebung und andererseits mit der Milchleitung zwischen Behälter 31 und Pumpe P1 verbunden ist. Die Verbindung ist derart ausgeführt, dass bei geöffnetem Luftventil Y21 und bei Fördern von Milch mittels der Pumpe P1 aufgrund den Venturi-Effekts Luft angesaugt und der geförderten Milch beigemengt wird.

Das Luftventil wird hierbei mittels der Steuereinheit intermittierend betrieben, d. h. durch eine schnelle Taktung zwischen geöffnetem und geschlossenem Zustand wird die zugegebene Luftmenge reguliert.

Hierdurch wird ein qualitativ hochwertiger Milchschaum erzeugt und es ist darüber hinaus möglich, die Schaumkonsistenz beliebig zu steuern.

Die Verwendung eines intermittierenden Luftventils zur Milchschaumerzeugung ist an sich bekannt und beispielsweise in DE 10 2009 041 809 A1 beschrieben.

Zur Erzeugung von kaltem Milchschaum schaltet die Milchpumpe P1 mit voller Leistung ein, die Drossel Y22 wird auf maximalen Querschnitt gestellt und das Luftventil Y21 öffnet intermittierend mit vorgegebenen Öffnungs- und Schließzyklen.

Noch vorhandenes Spülwasser wird auch hier zu Beginn mittels des Drainageventils Y10 in den Ausguss geleitet und anschließend der kalte Milchschaum durch entsprechende Steuerung des Milchventils Y9 unter Umgehung des Durchlauferhitzers 32 dem Auslass 33 zugeführt.

Zur Erzeugen von warmem Milchschaum wird grundsätzlich gleich verfahren, allerdings wird das Milchventil Y9 derart gesteuert, dass das Luft-Milchgemisch über den Durchlauferhitzer 32 zu dem Auslass 33 geführt wird und somit durch Erwärmung mittels des Durchlauferhitzers 32 warmer Milchschaum ausgegeben wird. Hierbei ist es insbesondere vorteilhaft, die Drossel Y22 auf einen geringeren als den maximalen Querschnitt zu stellen, da hierdurch die Konsistenz des warmen Milchschaums verbessert wird.

Zur Spülung der Milchleitungen weist die Vorrichtung eine Spülleitung 36 auf, welche in die Luftzuführleitung zwischen intermittierendem Luftventil Y21 und Mündungspunkt der Luftzuführleitung in die Milchansaugleitung mündet. Mittels eines Hauptwasserventils Y1, einer Hauptwasserpumpe M1 und eines Reinigungsventils Y5, welches ebenfalls als Zweiwegeventil ausgebildet ist, kann der Spülleitung 36 wahlweise Wasser oder Dampf zugeführt werden.

Vorteilhaft ist es, zunächst mittels kaltem oder warmem Wasser zu spülen. Für die Spülung wird zunächst die Milchansaugleitung mittels eines Ventils Y20 geschlossen, so dass kein Spülmedium über die Ansaugleitung in den Behälter 31 gelangen kann. Anschließend wird beispielsweise Wasser mittels der Hauptwasserpumpe M1 und die Spülleitung 36 in die Milchleitung eingeführt, so dass das Wasser die Pumpe P1, die Drossel Y22, den Durchlauferhitzer 32 und das Drainageventil Y10 passiert und schließlich durch entsprechende Steuerung des Drainageventils Y10 in den Ausguss ausgegeben wird. Anschließend wird das Ventil Y5 derart gesteuert, dass von dem Dampferzeuger 34 erzeugter Dampf in die Spülleitung 36 eingegeben wird und eine zusätzliche Reinigung mittels Dampf erzielt wird.

Die übrigen Komponenten der Kaffeemaschine gemäß Figur 1 sind in an sich bekannter Weise ausgebildet und werden in an sich bekannter Weise betrieben:
Der Dampferzeuger 34 weist eine Heizung H2, eine Niveausonde B4 und einen Temperaturfühler B2 auf. Über ein Ventil ist dem Dampferzeuger Wasser mittels der Hauptwasserpumpe M1 zuführbar. Diese Komponenten werden mittels der Steuereinheit derart gesteuert, dass bei Bedarf zumindest im oberen Bereich des Dampferzeugers genügend Wasserdampf vorhanden ist. Aus Sicherheitsgründen ist ein Überdruckventil UV vorgesehen.

Dampf aus dem Dampferzeuger 34 kann, wie zuvor beschrieben, der Milchleitung zum Erhitzen der Milch in einer zweiten Erwärmungsstufe zugeführt werden. Ebenso ist über ein Ventil Y8 die Ausgabe von Dampf an eine Dampflanze der Kaffeemaschine möglich.

Darüber hinaus kann heißes Wasser aus dem Dampferzeuger über ein Ventil Y7 an einen Auslass ausgegeben werden, beispielsweise wenn Teegetränke erwünscht sind.

Zur Erzeugung von Kaffee weist die Kaffeemaschine einen Wasserboiler mit einer Heizung H1 und einen Temperaturfühler B1 sowie aus Sicherheitsgründen ebenfalls einem Überdruckventil UV auf. Der Wasserboiler ist ebenfalls mit der Wasserhauptleitung über das Hauptwasserventil Y1 und die Hauptwasserpumpe M1 verbunden, wobei Heizung H1 und die weiteren Komponenten derart gesteuert werden, dass heißes Wasser zur Kaffeeerzeugung mit gewünschter Temperatur zur Verfügung steht. Zur Steuerung ist insbesondere an der Kaltwasserzuleitung zu dem Boiler ein Flowmeter B7 vorgesehen. Das heiße Wasser aus dem Boiler wird über ein Ventil Y4 einer Brühkammer BK zugeführt. Diese Brühkammer ist in an sich bekannter Weise ausgebildet und insbesondere mit einer Pulverzuführkammer und einem Mahlwerk in an sich bei Kaffeevollautomaten bekannter Weise ausgebildet. Mittels des heißen Wassers wird Kaffee erzeugt, welcher ebenfalls benachbart zu dem Auslass 33 an einen Kaffeeauslass 37 ausgegeben wird, der ebenfalls zwei voneinander beabstandete Auslassöffnungen aufweist.

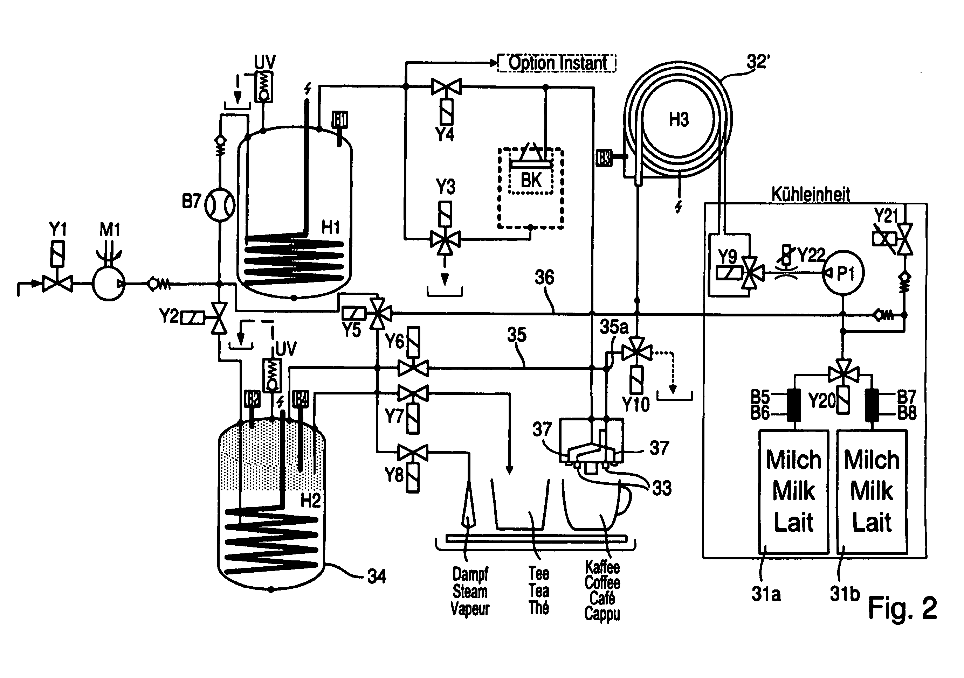

Figur 2 zeigt ein ebenfalls als Kaffeemaschine ausgebildetes zweites Ausführungsbeispiel, welches im Grundaufbau dem ersten Ausführungsbeispiel gleicht. Gleiche Bezugselemente bezeichnen gleiche oder gleichwirkende Elemente.

Zur Vermeidung von Wiederholungen wird im Folgenden lediglich auf die Unterschiede eingegangen:
Die Kaffeemaschine gemäß Figur 2 weist eine Durchlauferhitzer 32' mit zwei parallelen Leitungen auf. Über ein Ventil Y20' ist eine Pumpe P1 wahlweise mit einer ersten oder einer zweiten der parallelen Leitungen fluidleitend verbindbar. Weiterhin umfasst die Kaffeemaschine eine Kühleinheit zur Aufnahme eines ersten Milchbehälters 31 a und eines zweiten Milchbehälters 31 b. Über zwei Ansaugleitungen und ein Ventil Y20 ist wahlweise einer der beiden Behälter 31a oder 31 b mit einer Ansaugleitung der Pumpe P1 verbindbar.

Behälter 31 a enthält Kuhmilch, Behälter 31b hingegen lactosefreie Milch. Je nach gewünschter Ausgabe kann somit Milch oder lactosefreie Milch im Durchlauferhitzer erwärmt, gegebenenfalls mittels Dampfzufuhr in einer zweiten Stufe zusätzlich erhitzt und an einem Auslass 33 ausgegeben werden. Wesentlich ist, dass im Durchlauferhitzer getrennte, parallele Leitungen für Kuhmilch und lactosefreie Milch vorliegen, so dass insbesondere bei Benutzern mit Lactoseintoleranz gewährleistet ist, dass keine Kuhmilchrückstände aus dem Durchlauferhitzer in ein mit lactosefreier Milch zubereitetes Getränk gelangen.

In einer vorzugsweisen Ausführungsform ist in Abweichung von Figur 2 zwei für jeden Milchbehälter jeweils eine Pumpe, jeweils eine Ansaugleitung und jeweils eine Zuleitung zu der entsprechenden Leitung des Durchlauferhitzers vorgesehen, so dass auch im Flussweg vor dem Durchlauferhitzer die Flusswege für Kuhmilch und lactosefreie Milch vollständig getrennt sind.

## Patentansprüche

1. Vorrichtung zur Ausgabe von Milch, umfassend
eine Pumpe (P1) zum Fördern von Milch aus einem Behälter (31), einen Durchlauferhitzer (32) und einen Auslass (33) zur Ausgabe der Milch, welche derart miteinander zusammenwirkend ausgebildet sind, dass mittels der Pumpe (P1) geförderte Milch den Durchlauferhitzer (32) durchfließt und mittels des Durchlauferhitzers (32) erwärmte Milch aus dem Auslass (33) ausgebbar ist,
**dadurch gekennzeichnet, dass**
die Vorrichtung weiterhin mindestens einen Dampferzeuger (34) umfasst, welcher Dampferzeuger (34) derart mit dem Durchlauferhitzer (32) zusammenwirkend ausgebildet ist, dass stromabwärts des Durchlauferhitzers (32) und stromaufwärts des Auslasses (33) der Milch Dampf zur zusätzlichen Erwärmung zuführbar ist.

2. Vorrichtung nach Anspruch 1,
**dadurch gekennzeichnet,**
**dass** die Vorrichtung eine Steuereinheit umfasst, welche die Pumpe (P1) und/oder den Durchlauferhitzer (32) derart steuert, dass die Milch am Ausgang des Durchlauferhitzers eine Temperatur im Bereich von 50°C bis 85°C, bevorzugt im Bereich 55°C bis 80°C, weiter bevorzugt im Bereich 60°C bis 70°C aufweist.

3. Vorrichtung nach einem der vorangegangenen Ansprüche,
**dadurch gekennzeichnet,**
**dass** stromabwärts einer Dampfzuführstelle, an welcher der Milch Dampf zugeführt wird und stromaufwärts des Auslasses eine Beruhigungsleitung vorgesehen ist, welche bei Benutzung von der mit Dampf erhitzten Milch durchflossen wird und eine Länge von mindestens 5 cm, vorzugsweise im Bereich 10 cm bis 30 cm, weiter bevorzugt im Bereich 15 cm bis 20 cm aufweist.

4. Vorrichtung nach einem der vorangegangenen Ansprüche,
**dadurch gekennzeichnet,**
**dass** in einer Ansaugleitung zwischen Behältnis und Pumpe (P1) ein Dampfeinlass vorgesehen ist, welcher fluidleitend mit dem Dampferzeuger (34) zum wahlweisen Einleiten von Dampf in die Ansaugleitung verbunden ist.

5. Vorrichtung nach Anspruch 4,
**dadurch gekennzeichnet,**
**dass** in der Ansaugleitung stromaufwärts des Dampfeinlasses ein Ventil zum wahlweisen Verschließen der Ansaugleitung vorgesehen ist.

6. Vorrichtung nach einem der vorangegangenen Ansprüche,
**dadurch gekennzeichnet,**
**dass** die Vorrichtung zusätzlich zur Erzeugung von Milchschaum ausgebildet ist,
indem ein Lufventil zum wahlweisen einführen von Luft stromaufwärts des Durchlauferhitzers, vorzugsweise saugseitig der Pumpe (P1) vorgesehen ist.

7. Vorrichtung nach einem der vorangegangenen Ansprüche,
**dadurch gekennzeichnet,**
**dass** die Vorrichtung einen Kühlraum aufweist, in welchem ein Milchbehältnis anordbar und zumindest die Pumpe (P1) angeordnet ist.

8. Vorrichtung nach einem der vorangegangenen Ansprüche,
**dadurch gekennzeichnet,**
**dass** die Pumpe (P1) ein steuerbares Drosselventil aufweist, welches druckseitig der Pumpe (P1) angeordnet und dessen Durchflussquerschnitt mittels Steuersignalen vorgebbar ist.

9. Vorrichtung nach einem der vorangegangenen Ansprüchen,
**dadurch gekennzeichnet,**
**dass** zwischen Pumpe (P1) und Auslass (33) eine Umgehungsleitung vorgesehen ist, zum wahlweisen Umgehen des Durchlauferhitzers.

10. Vorrichtung nach einem der vorangegangenen Ansprüche,
**dadurch gekennzeichnet,**
**dass** der Durchlauferhitzer zwei parallele Leitungen aufweist, von denen eine erste Leitung zum Erwärmen von Milch und eine zweite Leitung zum Erwärmen einer weiteren Flüssigkeit, insbesondere lactosefreie Milch, ausgebildet ist.

11. Kaffeemaschine,
umfassend mindestens eine Brüheinheit sowie eine Vorrichtung zum Erwärmen von Milch gemäß einem der vorangegangenen Ansprüche,
wobei die Brüheinheit zur Erzeugung von Kaffee ausgebildet ist und mindestens einen Auslass (33) zur Ausgabe von Kaffee aufweist, welcher identisch oder benachbart zu dem Auslass (33) zur Ausgabe von erwärmter Milch ist.

12. Verfahren zum Erwärmen von Milch,
vorzugsweise mittels einer Vorrichtung gemäß einem der vorangegangenen Ansprüche,
wobei die Milch mittels einer Pumpe (P1) aus einem Behältnis gefördert, mittels eines Durchlauferhitzers, durch den die Milch fließt, erwärmt und über einen Auslass (33) ausgegeben wird,
**dadurch gekennzeichnet,**
**dass** die Milch nach Erhitzen mittels des Durchlauferhitzers zusätzlich durch Zuführung von Dampf erhitzt wird.

13. Verfahren nach Anspruch 12,
**dadurch gekennzeichnet,**
**dass** die Milch mittels des Durchlauferhitzers auf eine Temperatur kleiner 85°C, vorzugsweise im Bereich 50°C bis 85°C, weiter bevorzugt im Bereich 55°C bis 75°C, weiter bevorzugt im Bereich 60°C bis 70°C erwärmt wird.

14. Verfahren nach einem der Ansprüche 12 bis 13,
**dadurch gekennzeichnet,**
**dass** die Milch durch Zuführung von Dampf auf eine Temperatur größer 80°C, vorzugsweise im Bereich 80°C bis 95°C, weiter bevorzugt im Bereich 85°C bis 90°C erwärmt wird.

15. Verfahren nach einem der Ansprüche 12 bis 14,
**dadurch gekennzeichnet,**
**dass** warme Milch mit einer Förderleistung von mindestens 0,7 l/min, vorzugsweise mindestens 0,8 I/min, weiter bevorzugt mindestens 0,85 I/min, ausgegeben wird.

16. Verfahren zum wahlweisen Erzeugen von erwärmter Milch oder warmem Milchschaum,
wobei wahlweise zum Erzeugen von warmer Milch das Verfahren gemäß einem der Ansprüche 12 bis 15 angewendet wird oder zum Erzeugen von warmem Milchschaum Milch aus einem Behältnis gefördert, mit Luft vermischt und die Milch oder das Milch/Luftgemisch ausschließlich mittels eines Durchlauferhitzers erwärmt wird.

## Claims

1. Device for dispensing milk, comprising
a pump (P1) for conveying milk out of a container (31), a continuous-flow heater (32) and an outlet (33) for dispensing the milk, which are arranged to co-operate with one another in such a way that milk conveyed by means of the pump (P1) flows through the continuous-flow heater (32) and milk heated by means of the continuous-flow heater (32) is dispensable from the outlet (33),
**characterised in that**
the device further comprises at least one steam generator (34), which steam generator (34) is arranged to co-operate with the continuous-flow heater (32) in such a way that, downstream of the continuous-flow heater (32) and upstream of the outlet (33), steam can be supplied to the milk for additional heating.

2. Device according to claim 1,
**characterised in that**
the device comprises a control unit which controls the pump (P1) and/or the continuous-flow heater (32) in such a way that at the output of the continuous-flow heater the milk has a temperature in the range of from 50°C to 85°C, preferably in the range of from 55°C to 80°C, more preferably in the range of from 60°C to 70°C.

3. Device according to either one of the preceding claims,
**characterised in that**
downstream of a steam supply point, at which the milk is supplied with steam, and upstream of the outlet there is provided a calming line through which milk that has been heated with steam flows during use and which has a length of at least 5 cm, preferably in the range of from 10 cm to 30 cm, more preferably in the range of from 15 cm to 20 cm.

4. Device according to any one of the preceding claims,
**characterised in that**
in a suction line between the container and the pump (P1) there is provided a steam inlet which is in fluid-conducting connection with the steam generator (34) for the optional introduction of steam into the suction line.

5. Device according to claim 4,
**characterised in that**
a valve for optional closure of the suction line is provided in the suction line upstream of the steam inlet.

6. Device according to any one of the preceding claims,
**characterised in that**
the device is arranged additionally to generate milk foam by the provision of an air valve for the optional introduction of air upstream of the continuous-flow heater, preferably on the suction side of the pump (P1).

7. Device according to any one of the preceding claims,
**characterised in that**
the device has a cooling chamber in which a milk container can be arranged and at least the pump (P1) is arranged.

8. Device according to any one of the preceding claims,
**characterised in that**
the pump (P1) has a controllable throttle valve which is arranged on the pressure side of the pump (P1) and the throughflow cross-section of which can be specified by means of control signals.

9. Device according to any one of the preceding claims,
**characterised in that**
between the pump (P1) and the outlet (33) there is provided a bypass line for optional bypassing of the continuous-flow heater.

10. Device according to any one of the preceding claims,
**characterised in that**
the continuous-flow heater has two parallel lines of which a first line is arranged for heating milk and a second line is arranged for heating a further liquid, especially lactose-free milk.

11. Coffee machine,
comprising at least one brewing unit and a device for heating milk in accordance with any one of the preceding claims,
wherein the brewing unit is arranged to generate coffee and has at least one outlet (33) for dispensing coffee, which outlet is identical with or adjacent to the outlet (33) for dispensing heated milk.

12. Method of heating milk,
preferably by means of a device according to any one of the preceding claims,
wherein the milk is conveyed out of the container by means of a pump (P1), heated by means of a continuous-flow heater through which the milk flows, and is dispensed via an outlet (33), **characterised in that**
the milk, after being heated by means of the continuous-flow heater, is additionally heated by being supplied with steam.

13. Method according to claim 12,
**characterised in that**
the milk is heated by means of the continuous-flow heater to a temperature of less than 85°C, preferably in the range of from 50°C to 85°C, more preferably in the range of from 55°C to 75°C, more preferably in the range of from 60°C to 70°C.

14. Method according to either one of claims 12 and 13,
**characterised in that**
the milk is heated by being supplied with steam to a temperature greater than 80°C, preferably in the range of from 80°C to 95°C, more preferably in the range of from 85°C to 90°C.

15. Method according to any one of claims 12 to 14,
**characterised in that**
hot milk is dispensed at a delivery rate of at least 0.7 I/min, preferably at least 0.8 I/min, more preferably at least 0.85 I/min.

16. Method for the generation of either heated milk or hot milk foam, wherein, for the generation of hot milk, the method according to any one of claims 12 to 15 is employed or, for the generation of hot milk foam, milk is conveyed out of a container and mixed with air, and the milk or the milk/air mixture is heated exclusively by means of a continuous-flow heater.

## Revendications

1. Dispositif de distribution de lait, comprenant
une pompe (P1) conçue pour refouler du lait hors d'un réceptacle (31), un réchauffeur instantané (32) et une sortie (33) affectée à la distribution du lait, qui sont réalisés pour coopérer mutuellement de façon telle que du lait, refoulé par ladite pompe (P1), parcoure ledit réchauffeur instantané (32) et que du lait, réchauffé au moyen dudit réchauffeur instantané (32), puisse être dispensé à partir de ladite sortie (33),
**caractérisé par le fait que**
ledit dispositif inclut, par ailleurs, au moins un générateur de vapeur (34), lequel générateur de vapeur (34) est réalisé pour coopérer avec le réchauffeur instantané (32), de telle sorte que de la vapeur puisse être délivrée en vue du réchauffage additionnel, en aval dudit réchauffeur instantané (32) et en amont de la sortie (33).

2. Dispositif selon la revendication 1,
**caractérisé par le fait**
**que** ledit dispositif inclut une unité de commande qui pilote la pompe (P1) et/ou le réchauffeur instantané (32) de façon telle que le lait présente, à la sortie dudit réchauffeur instantané, une température située dans la plage de 50 °C à 85 °C, de préférence dans la plage de 55 °C à 80 °C, et dans la plage de 60 °C à 70 °C avec préférence particulière.

3. Dispositif selon l'une des revendications précédentes,
**caractérisé**
**par** la présence, en aval d'une zone de délivrance de vapeur dans laquelle de la vapeur est adjointe au lait, et en amont de la sortie, d'un conduit de stabilisation qui est parcouru, en service, par le lait réchauffé à la vapeur et qui présente une longueur d'au moins 5 cm, de préférence située dans la plage de 10 cm à 30 cm, et dans la plage de 15 cm à 20 cm avec préférence particulière.

4. Dispositif selon l'une des revendications précédentes,
**caractérisé**
**par** la présence, dans un conduit d'aspiration entre le réceptacle et la pompe (P1), d'une admission de vapeur en liaison d'écoulement fluidique avec le générateur de vapeur (34), en vue de l'introduction sélective de vapeur dans ledit conduit d'aspiration.

5. Dispositif selon la revendication 4,
**caractérisé par le fait**
**qu'**une vanne est prévue dans le conduit d'aspiration, en amont de l'admission de vapeur, en vue de l'obturation sélective dudit conduit d'aspiration.

6. Dispositif selon l'une des revendications précédentes,
**caractérisé par le fait**
**que** ledit dispositif est additionnellement réalisé en vue de produire de l'écume de lait, une vanne d'air étant alors prévue pour l'introduction sélective d'air en amont du réchauffeur instantané, de préférence du côté aspiration de la pompe (P1).

7. Dispositif selon l'une des revendications précédentes,
**caractérisé par le fait**
**que** ledit dispositif comporte un espace de réfrigération dans lequel un réceptacle de lait peut être placé, et qui renferme au moins la pompe (P1).

8. Dispositif selon l'une des revendications précédentes,
**caractérisé par le fait**
**que** la pompe (P1) comporte une vanne pilotable d'étranglement située du côté pression de ladite pompe (P1), et dont la section transversale d'écoulement peut être préétablie au moyen de signaux de commande.

9. Dispositif selon l'une des revendications précédentes,
**caractérisé par le fait**
**qu'**un conduit de contournement est prévu entre la pompe (P1) et la sortie (33), en vue du contournement sélectif du réchauffeur instantané.

10. Dispositif selon l'une des revendications précédentes,
**caractérisé par le fait**
**que** le réchauffeur instantané compte deux conduits parallèles, parmi lesquels un premier conduit est réalisé en vue de réchauffer du lait et un second conduit est réalisé en vue de réchauffer un autre liquide, en particulier du lait exempt de lactose.

11. Machine à café
comprenant au moins une unité de brassage, ainsi qu'un dispositif conforme à l'une des revendications précédentes, conçu pour réchauffer du lait,
ladite unité de brassage étant réalisée en vue de produire du café, et comportant au moins une sortie (33) qui est affectée à la distribution de café et est identique à la sortie (33) affectée à la distribution de lait réchauffé, ou est voisine de cette dernière.

12. Procédé de réchauffage de lait,
de préférence au moyen d'un dispositif conforme à l'une des revendications précédentes, le lait étant refoulé hors du réceptacle au moyen d'une pompe (P1), réchauffé au moyen d'un réchauffeur instantané par lequel le lait circule, puis dispensé par l'intermédiaire d'une sortie (33),
**caractérisé par le fait**
**que** le lait est additionnellement réchauffé, par adjonction de vapeur, à l'issue du réchauffage au moyen du réchauffeur instantané.

13. Procédé selon la revendication 12,
**caractérisé par le fait**
**que** le lait est réchauffé, au moyen du réchauffeur instantané, jusqu'à une température inférieure à 85 °C, de préférence située dans la plage de 50 °C à 85 °C, de préférence encore dans la plage de 55 °C à 75 °C, et dans la plage de 60 °C à 70 °C avec préférence particulière.

14. Procédé selon l'une des revendications 12 à 13,
**caractérisé par le fait**
**que** le lait est réchauffé, par adjonction de vapeur, jusqu'à une température supérieure à 80 °C, de préférence située dans la plage de 80 °C à 95 °C, et dans la plage de 85 °C à 90 °C avec préférence particulière.

15. Procédé selon l'une des revendications 12 à 14,
**caractérisé par le fait**
**que** du lait chaud est dispensé avec un débit d'au moins 0,7 l/min, de préférence d'au moins 0,81/min, et d'au moins 0,85 l/min avec préférence particulière.

16. Procédé de production sélective de lait réchauffé, ou d'écume de lait chaude,
dans lequel, sélectivement, le procédé conforme à l'une des revendications 12 à 15 est mis en oeuvre pour produire du lait chaud, ou bien, pour produire de l'écume de lait chaude, du lait est refoulé hors d'un réceptacle et mélangé à de l'air, puis le lait ou le mélange lait/air est réchauffé exclusivement au moyen d'un réchauffeur instantané.
